Europäisches Patentamt

European Patent Office

Office européen des brevets

(11) Veröffentlichungsnummer: **0 489 356 A1**

## (12) EUROPÄISCHE PATENTANMELDUNG

(21) Anmeldenummer: **91120387.5**

(22) Anmeldetag: **28.11.91**

(51) Int. Cl.5: **B23D 61/18**

(30) Priorität: **03.12.90 DE 4038480**

(43) Veröffentlichungstag der Anmeldung:
**10.06.92 Patentblatt 92/24**

(84) Benannte Vertragsstaaten:
**AT DE FR GB IT**

(71) Anmelder: **MVZ MASCHINENBAU UND VERZAHNUNGSTECHNIK, JOHANNES FALKENSTEIN**
**Zeppelinstrasse 16**
**W-7953 Bad Schussenried(DE)**

(72) Erfinder: **Falkenstein, Johannes**
**Zeppelinstrasse 16**
**W-7953 Bad Schussenried(DE)**

(74) Vertreter: **Patentanwälte Dipl.-Ing. E. Eisele**
**Dr.-Ing. H. Otten**
**Seestrasse 42**
**W-7980 Ravensburg(DE)**

(54) **Sägeseil.**

(57) Es wird ein Sägeseil zur Verwendung an einer Bandsägemaschine o. dgl. zur Bearbeitung von gesteinsartigen Materialien vorgeschlagen. Bei derartigen Sägeseilen stellt sich während des Betriebs eine Längenausdehnung des Drahtseils ein, die zu Abständen zwischen fest auf dem Drahtseil angeordneten Bauelementen, wie Schneidhülsen und Kunststoffummantelungen, führen kann. Um einen Längenausgleich des Drahtseils zu schaffen, sind am Säge-geseil wiederkehrende Längenabschnitte A vorgesehen, die von jeweils zwei Quetschhülsen (5) begrenzt sind und zwischen denen sich die Schneidhülsen (3) und die Kunststoffhülsen (4) axial verschiebbar bewegen können. Dabei wird der Längenausgleich durch eine Ausdehnung einer Druckfeder (6) bewerkstelligt, die die jeweiligen Schneidhülsen und Kunststoffhülsen gegen die Quetschhülsen preßt.

Fig.2

Die Erfindung betrifft ein Sägeseil zur Verwendung an einer Bandsägemaschine o. dgl. nach dem Oberbegriff des Anspruchs 1.

Stand der Technik:

Aus der DE 38 05 405 A1 ist ein Sägewerkzeug unter Verwendung eines Sägeseils bekannt geworden, welches auf einem Drahtseil angeordnete Schneidelementhülsen aufweist, wobei die Abstände zwischen den Schneidelementhülsen durch das Drahtseil umgebene Kunststoffhülsen ausgefüllt ist. In dieser Druckschrift ist angegeben, daß die einzelnen Schneidelementhülsen fest auf dem Seil in ihrer Lage fixiert sind. Der Zwischenraum zwischen den fest angeordneten Schneidelementhülsen wird durch einen Kunststoffschlauch oder einen Kunststoffüberzug ausgefüllt.

Die Verwendung eines Sägewerkzeugs mit einem Drahtseil als Kern hat den Vorteil, daß das Sägeseil in seinem Seildurchmesser sehr klein gehalten werden kann und damit zur Bearbeitung feinster Konturen geeignet ist. Um eine gewisse Flexibilität zu behalten, darf das Seil jedoch nicht durchgehend mit einer z. B. galvanisch aufgebrachten Diamantbeschichtung versehen sein, da diese bei einer Umlenkung bei einer Bandsägemaschine, d. h. bei einer stetigen Beanspruchung auf Biegung, zerstört würde. Deshalb weisen derartige Sägeseile eine in Abständen angeordnete Diamantbeschichtung auf, die im allgemeinen durch auf das Seil aufgeschobene, diamant-beschichtete Schneidhülsen oder Schneidperlen erhalten wird (DE 24 51 153 C2). Dabei können die Schneidhülsen oder Schneidperlen durch Aufquetschen, d. h. durch mechanische Verformung auf das Drahtseil aufgeklemmt werden. Der Zwischenraum zwischen den Schneidperlen wird dann durch Kunststoff-Abstandshülsen (DE 38 05 405) oder durch einzelne Abstützfedern (DE-AS 1 118 086) ausgefüllt.

Die Verwendung von nicht fest auf dem Drahtseil aufgequetschten Schneidelementhülsen gemäß der DE-AS 1 118 086 hat den Vorteil, daß sich die Schneidhülsen während des Betriebs des Sägewerkzeugs ständig um ihre eigene Längsachse drehen können, so daß eine gleichmäßige Abnutzung der Schneidelemente gewährleistet ist. Weiterhin wird durch die Vermeidung einer Vielzahl aufgequetschter Schneidelementhülsen eine hierdurch hervorgerufene eventuelle Beschädigung des Drahtseiles vermieden.

Auch die DE 38 05 405 sieht in weiteren Ausführungsbeispielen ein Sägewerkzeug vor, welches komplett mit einer Drahtspirale umgeben ist, auf welchem die Schneidelemente als zusätzliche Beschichtung in Abständen zueinander aufgebracht sind.

Die Verwendung eines Sägeseils mit einem Kunststoffüberzug auf dem Drahtseil zwischen den einzelnen Schneidelementhülsen hat gegenüber der Anordnung von Spiralfedern als Zwischenglieder zwischen den Schneidelementhülsen den Vorteil, daß ein außerordentlich ruhiger Rundlauf des Sägeseils im Betrieb gewährleistet ist. Hierfür kann die Kunststoffummantelung in ihrem Außendurchmesser nahtlos sich dem Außendurchmesser der Schneidelementhülsen anpassen, wobei eine gleichmäßige Abnützung des Außendurchmessers und damit ein gleichbleibender Rundlauf gewährleistet ist. Dies ist mit einer Bestückung mit Schraubenfedern als Zwischenglieder bzw. einer Drahtspirale nicht ohne weiteres möglich.

Es hat sich im Betrieb derartiger Sägewerkzeuge gezeigt, daß sich das Drahtseil als Grundkörper während der Betriebszeit ausdehnt, so daß die Länge des Sägeseils insgesamt zunimmt. Dies hat bei fest aufgequetschten Schneidelementhülsen mit dazwischen liegender Kunststoffbeschichtung des Drahtseiles den Nachteil, daß sich zwischen den einzelnen Elementen merkliche Abstände einstellen. Diese Zwischenräume führen aber zu Unstetigkeiten auf der Sägeseiloberfläche, was den Gleichlauf des Sägeseils stört.

Dieser geschilderte Effekt würde bei einer Anordnung gemäß DE-AS 1 118 086 zwar nicht auftreten, da die Hülsen auf dem Drahtseil längsverschiebbar angeordnet sind und ein Abstandsausgleich durch die Schraubenfedern zwischen den Schneidelementhülsen erfolgt. Diese Anordnung hat jedoch den zuvor geschilderten Nachteil, der mit der Verwendung von Schraubenfedern als Distanzhalter verbunden ist.

Vorteile der Erfindung:

Das erfindungsgemäße Sägeseil mit den kennzeichnenden Merkmalen des Anspruchs 1 hat demgegenüber den Vorteil, daß ein Abstandsausgleich bei einem sich während der Betriebsdauer verlängernden Drahtseil auch dann geschaffen wird, wenn das Sägeseil mit Schneidelementhülsen und mit dazwischen angeordneter Kunststoffbeschichtung ausgebildet ist. Hierfür liegt der Erfindung der Kerngedanke zugrunde, daß auf dem Sägeseil feststehende Abschnitte festgelegt werden, die durch auf dem Sägeseil ortsfeste Quetschhülsen gebildet sind und zwischen denen sich sowohl die Schneidelementhülsen als auch der dazwischen liegende Kunststoffüberzug axial beliebig verschieben kann. Ein Längenausgleich, hervorgerufen durch eine Verlängerung des Drahtseils, wird durch jeweils eine Druckfeder in jedem Längenabschnitt zwischen zwei Quetschhülsen bewerkstelligt. In dem Maß, wie sich das Drahtseil in seiner Länge ausdehnt, verlängert sich die Druckfeder zwischen jeweils zwei angeordneten Quetschhülsen. Die sich zwischen jeweils zwei Quetschhülsen befindlichen Schneidelementhülsen und benachbarten Kunststoffhülsen sind hierfür auf dem Drahtseil längsverschiebbar gelagert.

Durch diese Maßnahme kann ein Sägeseil mit beweglich aufgebrachten Schneidelementhülsen und zwischen den Schneidelementhülsen angebrachten Kunststoffummantelungen beibehalten werden. Lediglich im Bereich der Druckfedern ist die Kunststoffummantelung durch eine Druckfeder ersetzt.

In den Unteransprüchen sind vorteilhafte und zweckmäßige Weiterbildungen des erfindungsgemäßen Sägeseils angegeben.

Besonders vorteilhaft ist die Anordnung von größeren Abschnitten zwischen jeweils zwei benachbarten Quetschhülsen mit einer Vielzahl dazwischen liegenden Schneidelementen und benachbarter Kunststoffummantelung. Hierdurch wird die Anzahl der Quetschhülsen sowie die Häufigkeit von Schraubenfedern als Längenausgleich reduziert.

Die zwischen jeweils benachbarten Schneidelementen vorgesehenen Abstände werden weitgehend auch dann beibehalten, wenn zwischen diesen Schneidelementen sich eine Quetschhülse oder eine Schraubenfeder befindet. Hierdurch wird ein möglichst gleichmäßiger Rundlauf des Sägeseils gewährleistet. Das Sägeseil kann ein Drahtseil als Grundkörper aufweisen, der selbst eine elastische Kunststoffummantelung aufweist. Auf einer solchen Ummantelung kann ggf. die Schneidelementhülse und die Kunststoffhülse zwischen benachbarten Schneidelementhülsen längsverschiebbar aufgebracht sein.

Weitere Einzelheiten der Erfindung sind in der Zeichnung dargestellt und unter Angabe weiterer Vorteile in der nachfolgenden Beschreibung näher erläutert. Es zeigen

Fig. 1    einen Längenabschnitt des erfindungsgemäßen Sägeseils mit wiederkehrenden Längenbereichen zwischen jeweils zwei Quetschhülsen und

Fig. 2    eine vergrößerte Darstellung der Abbildung nach Fig. 1.

Generell erstreckt sich die Erfindung auf die Verwendung des erfindungsgemäßen Sägeseils an einer nicht näher dargestellten Bandsägemaschine zur Herstellung von Konturen, insbesondere auch von Innenkonturen in Gesteinsmaterialien, wobei das Sägeseil über einen nicht näher dargestellten Verschluß zu öffnen ist. Ein solcher Verschluß ist beispielsweise in der DE 38 05 405 A1 dargestellt.

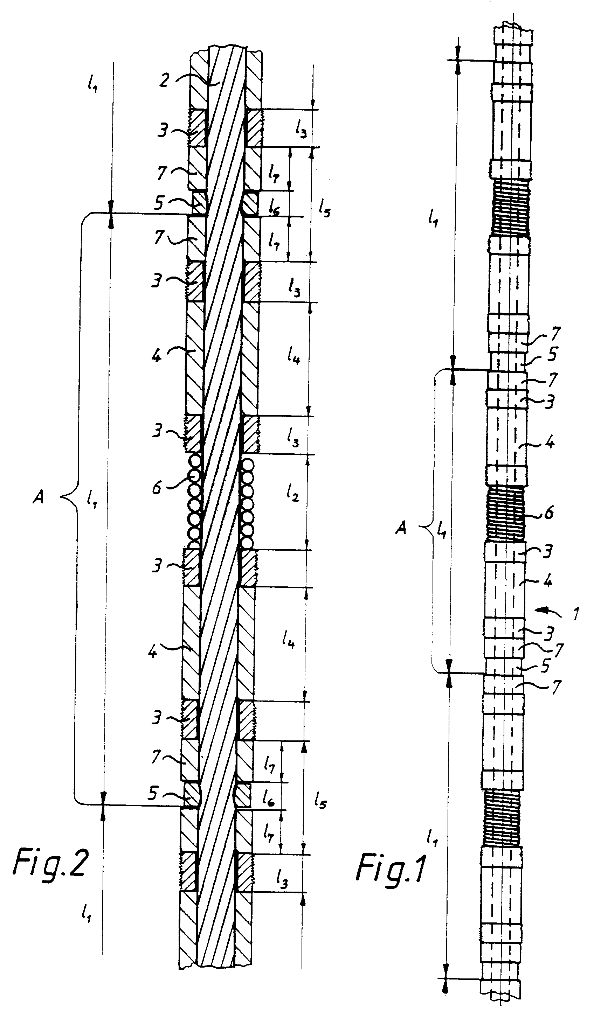

Das in den Figuren 1 und 2 dargestellte erfindungsgemäße Sägeseil 1 weist als Grundkörper ein Drahtseil 2 auf, welches ggf. mit einem nicht näher dargestellten, elastischen Kunststoffüberzug als Schutzummantelung versehen sein kann. Auf dem Drahtseil 2 sind Schneid- bzw. Schleifelementhülsen 3 angeordnet, die im weiteren als Schneidhülsen bezeichnet werden. Zwischen jeweils zwei benachbarten Schneidhülsen 3 ist das Drahtseil von einer Kunststoffummantelung 4 umgeben, die erfindungsgemäß als Kunststoffhülse aus einem Material hergestellt ist, welches nur geringe Abriebeigenschaften aufweist, d. h. welches im Betrieb einem geringen Abrieb unterworfen ist. Sowohl die Schneidhülse 3 als auch die Kunststoffhülse 4 sind auf dem Drahtseil 2 längsverschieblich, d. h. axial verschiebbar gelagert, so daß diese Teile sich geringfügig auf dem Drahtseil 2 axial verschieben können.

Erfindungsgemäß ist das Drahtseil aus wiederkehrenden bzw. sich wiederholenden Abschnitten A mit der Länge $l_1$ aufgebaut. In Fig. 1 sind drei solcher Abschnitte A, in Fig. 2 ein kompletter Abschnitt A dargestellt. Jeder Abschnitt A wird von zwei Quetschhülsen 5 begrenzt, die fest auf dem Drahtseil 2 aufgequetscht sind. Diese Quetschhülsen 5, die sich in einem Abstand $l_1$ zueinander befinden, begrenzen feste Abschnitte auf dem Sägeseil 1. Zwischen diesen jeweils benachbarten Quetschhülsen 5 können sich die Schneidhülsen 3 und auch die Kunststoffhülsen 4 in axialer Richtung bewegen, um einen Längenausgleich bei einem sich in der Länge ausdehnenden Drahtseil zu bewirken. Zweck der Anordnung ist es, daß die Schneidhülsen 3 und die Kunststoffhülsen 4 stets ohne Zwischenabstand aufeinanderfolgen, um Unstetigkeiten auf dem Sägeseil zu vermeiden. Bei einem sich verlängernden Sägeseil würden zwangsläufig Abstände zwischen den einzelnen Teilen entstehen. Um dieses auszugleichen, sieht die Erfindung eine zusätzliche Druckfeder 6 vor, die die jeweils zwischen den Quetschhülsen 5 angeordneten Teile axial derart verschiebt, daß sie ohne Abstand aneinander anliegen. Ein Längenausgleich des sich verlängernden Drahtseils 2 wird deshalb durch eine Verlängerung der Druckfeder 6 bewerkstelligt.

Um einen möglichst gleichmäßigen Umlauf des Sägeseils zu erreichen, sind die einzelnen Bauelemente etwa in gleichen Abständen zueinander angeordnet. In der Figur 2 weisen die Schneidhülsen 3 eine Länge $l_3$ und die Kunststoffhülsen 4 eine Länge $l_4$ auf. Die jeweilige Quetschhülse 5 ist zwischen zwei benachbarten Schneidhülsen angeordnet, die einen Abstand von $l_5$ aufweisen, wobei $l_5 \cong l_4$ ist. Die Quetschhülse 5 hat eine Länge $l_6$. Der Zwischenraum zur jeweils benachbarten Schneidhülse wird durch verkürzte Kunststoffhülsen 7 ausgefüllt, die jeweils eine Länge $l_7$ aufweisen.

Die Länge $l_2$ der Druckfeder 6 ist zunächst etwas geringer ausgeführt als die Länge $l_4$ der Kunststoffhülsen 4. Durch Ausdehnung des Drahtseils 2 kann jedoch die Länge $l_2$ bis zu einer Länge $l_4$ anwachsen.

Die Kunststoffhülsen 4, 7 weisen einen Außendurchmesser auf, der etwa dem Außendurchmesser der Schneidhülse 3 entspricht, so daß das Seil möglichst ohne Absatz in seinem Durchmesser abläuft. Gleiches gilt auch weitgehend für den Durchmesser den Quetschhülse 5 und dem Durchmesser der Druckfeder 6, die möglichst nahe an den Außendurchmesser der Schneidhülse 3 heranreichen sollen. Die Quetschhülse 5 und/oder die Druckfeder 6 können auf ihrer Außenmantelfläche ebenfalls eine Diamantbeschichtung o. dgl. aufweisen, um so als Schneidelemente selbst zu dienen.

Die Erfindung ist nicht auf das dargestellte und beschriebene Ausführungsbeispiel beschränkt. Sie umfaßt auch vielmehr alle fachmännischen Abwandlungen oder Weiterbildungen des erfindungsgemäßen Grundgedankens. So kann beispielsweise die Anzahl der Schneidelemente 3 und der Kunststoffhülsen 4, 7 zwischen den jeweiligen Quetschhülsen in ihrer Anzahl variieren. Gleichermaßen kann die Druckfeder 6 asymmetrisch im Längenabschnitt A angeordnet sein.

Bei dem erfindungsgemäßen Sägeseil kann die jeweilige Druckfeder 6 auch so ausgebildet sein, daß sie außer der Kompensierung der Längenausdehnung des Seils auch ggf. den Raum ausfüllt, der sich durch Verschleiß oder Abnutzung oder Abspringen einer Kunststoffhülse 4, 7 oder einer Schneidhülse 5 ergibt. Hierfür muß die Druckfeder natürlich eine größere Längenausdehnung besitzen. Im Neuzustand sind die Windungen der Druckfeder dichtgepackt nebeneinanderliegend angeordnet, so daß eine große Ausdehnung möglich ist.

**Patentansprüche**

1. Sägeseil zur Verwendung an einer Randsägemaschine o. dgl., zur Bearbeitung von gesteinsartigen Materialien, bestehend aus einem endlosen, vorzugsweise durch einen Verschluß auftrennbaren Drahtseil (2) mit hierauf in weitgehend konstantem Abstand zueinander angeordneten, diamant-, hartmetall- oder keramikbeschichteten Schneid- bzw. Schleifelementhülsen (3), wobei in den Zwischenräumen zwischen den Schneidelementen (3) Kunststoffummantelungen (4, 7) vorgesehen sind, dadurch gekennzeichnet, daß auf dem Sägeseil (1) wiederkehrende Abschnitte A vorgesehen sind, die von fest auf dem Drahtseil (2) angeordneten Quetschhülsen (5) begrenzt sind, daß die Schneidelemente (3) und die als Kunststoffhülsen ausgebildeten Kunststoffummantelungen (4, 7) innerhalb des Längenabschnitts A axial verschiebbar auf dem Drahtseil (2) angeordnet sind, wobei eine Verlängerung des Drahtseils (2) und/oder ein entstehender Zwischenraum im Abschnitt A durch einen Längenausgleich einer Druckfeder (6) im Längenabschnitt A kompensierbar ist.

2. Sägeseil nach Anspruch 1, dadurch gekennzeichnet, daß sowohl die Schneidelementhülsen (3) als auch die Kunststoffhülsen (4, 7) auf dem Drahtseil längsverschiebbar angeordnet sind, daß wenigstens zwei Schneidelementhülsen, vorzugsweise vier Schneidelementhülsen (3) mit jeweils benachbarten Kunststoffhülsen (4, 7) zwischen zwei auf dem Drahtseil (2) ortsfesten Quetschhülsen (5) angeordnet sind und daß die Schneidelementhülsen (3) und die Kunststoffhülsen (4, 7) mittels einer vorzugsweise symmetrisch oder mittig zwischen den Quetschhülsen (5) angeordneten Druckfeder (6) axial gegen die Quetschhülsen (5) verspannbar sind.

3. Sägeseil nach Anspruch 1 oder 2, dadurch gekennzeichnet, daß der Abstand $l_4$, $l_5$ zwischen jeweils zwei benachbarten Schneidelementhülsen (3) auf dem Drahtseil (2) weitgehend konstant ist.

4. Sägeseil nach einem oder mehreren der vorhergehenden Ansprüche, dadurch gekennzeichnet, daß die zwischen zwei Schneidelementhülsen (3) angeordnete Druckfeder (6) einen Abstand $l_2$ aufweist, der geringfügig kleiner ist als der Abstand $l_4$ zwischen zwei benachbarten Schneidelementhülsen (3) mit dazwischen angeordneter Kunststoffhülse (4).

5. Sägeseil nach einem oder mehreren der vorhergehenden Ansprüche, dadurch gekennzeichnet, daß die Quetschhülse (5) jeweils zwischen zwei Schneidelementen (3) angeordnet ist, die den gleichen Abstand $l_5$ zueinander aufweisen, wie zwei Schneidelemente (3) mit dazwischen liegender Kunststoffhülse (4), wobei seitlich der Quetschhülse (5) jeweils zwei verkürzte Kunststoffhülsen (7) angeordnet sind.

6. Sägeseil nach einem oder mehreren der vorhergehenden Ansprüche, dadurch gekennzeichnet, daß das Drahtseil (2) einen flexiblen Kunststoff-Schutzüberzug aufweist, auf dem die Schneidelementhülsen (3) und die Kunststoffhülsen (4, 7) längsverschiebbar und rotierbar angeordnet sind.

7. Sägeseil nach einem oder mehreren der vorhergehenden Ansprüche, dadurch gekennzeichnet, daß das Sägeseil (1) über seine gesamte Länge Bauteile mit weitgehend dem gleichen Außendurchmesser aufweist.

8. Sägeseil nach einen oder mehreren der vorhergehenden Ansprüche, dadurch gekennzeichnet, daß die Druckfeder im Neuzustand des Sägeseils mit ihren Windungen dichtgepackt nebeneinanderliegend ausgebildet ist.

Fig.2

Fig.1

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 339 439 (MVZ MASCHINENBAU UND VERZAHNTECHNIK, JOHANNES FALKENSTEIN) <br> * Spalte 4, Zeile 12 - Spalte 5, Zeile 46 * <br> * Anspruch 1; Abbildung 1 * <br> --- | 1-8 | B23D61/18 |
| A | FR-A-2 021 046 (G.H.D. PROWSE ET AL) <br> * Seite 4, Zeile 30 - Zeile 35 * <br> * Abbildung 3 * <br> --- | 1,2,5 | |
| A | DE-B-1 236 396 (W. ELLERICH) <br> * Spalte 3, Zeile 34 - Spalte 4, Zeile 9 * <br> * Abbildungen 1,3 * <br> --- | 1-3 | |
| A | IT-A-0 718 311 (SPA TEMA TECHNICA MARMO) <br> * Seite 2, Zeile 61 - Zeile 90 * <br> * Abbildung 2 * <br> --- | 1,2 | |
| D,A | DE-B-1 118 086 (SUPER-CUT INC) <br> * Spalte 4, Zeile 31 - Zeile 36 * <br> * Spalte 4, Zeile 58 - Zeile 64 * <br> * Abbildung 2 * <br> & GB-A-0 723 197 <br> & FR-A-1 087 002 <br> & US-A-2 679 839 <br><br> ----- | 1,2 | RECHERCHIERTE SACHGEBIETE (Int. Cl.5 ) <br><br> B23D |

Der vorliegende Recherchenbericht wurde für alle Patentansprüche erstellt

| Recherchenort | Abschlußdatum der Recherche | Prüfer |
|---|---|---|
| DEN HAAG | 17 FEBRUAR 1992 | MOET H.J.K. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
    Dokument

EPO FORM 1503 03.82 (P0403)